**Europäisches Patentamt**

**European Patent Office**

**Office européen des brevets**

(11) Publication number: **0 076 514**
**A2**

# (12) EUROPEAN PATENT APPLICATION

(21) Application number: **82109192.3**

(22) Date of filing: **05.10.82**

(51) Int. Cl.³: **G 02 B 7/26**

(30) Priority: **06.10.81 JP 159770/81**

(43) Date of publication of application:
**13.04.83 Bulletin 83/15**

(84) Designated Contracting States:
**DE FR GB IT**

(71) Applicant: **TOYOTA JIDOSHA KABUSHIKI KAISHA**
**1, Toyota-cho Toyota-shi**
**Aichi-ken 471(JP)**

(71) Applicant: **SUMITOMO ELECTRIC INDUSTRIES**
**LIMITED**
**No. 15, Kitahama 5-chome Higashi-ku**
**Osaka-shi Osaka(JP)**

(72) Inventor: **Moriyama, Masakazu**
**10, Toyota-cho Toyota-shi**
**Aichi(JP)**

(72) Inventor: **Shinohara, Toshio**
**49-11, 5-chome, Kosaka-cho Toyota-shi**
**Aichi(JP)**

(72) Inventor: **Hayashi, Kyozo**
**Osaka-Works Sumitomo Electric Ind. Ltd.**
**1-3, Shimaya 1-chome Konohana-ku Osaka(JP)**

(72) Inventor: **Fujii, Koji**
**Osaka-Works Sumitomo Electric Ind. Ltd.**
**1-3, Shimaya 1-chome Konohana-ku Osaka(JP)**

(72) Inventor: **Sakamoto, Fukuma**
**Osaka-Works Sumitomo Electric Ind. Ltd.**
**1-3, Shimaya 1-chome Konohana-ku Osaka(JP)**

(74) Representative: **Glawe, Delfs, Moll & Partner**
**Patentanwälte**
**Rothenbaumchaussee 58 Postfach 2570**
**D-2000 Hamburg 13(DE)**

(54) **Optical connector.**

(57) In an optical connector having a male half (2) with at least one projecting plug (34) connected to an optical fiber, and a female half (1) with at least one sleeve (7) for receiving said plug, said sleeve (7) is mounted in said female half (1) as a separate and exchangeable part so that a sleeve (7) for receiving a second plug (6) connected to a second optical fiber may be replaced by a sleeve for receiving an optoelectronic device.

FIG. 2

OPTICAL CONNECTOR

The present invention relates to an optical connector used to connect optical fibers together or optical fibers with optoelectric devices.

Generally, an optical fiber cord is attached to an elongated plug having a conical outer surface. The arrangement of coupling a male half to a female half is commonly employed with an optical connector. A connector having the plug jutting from the end face of its housing is referred to as a male half.

On the other hand, the female half is arranged so that the plug and optoelectric device are contained in its housing inwardly of its end surface. A window is formed in the front surface of the female half so as to receive the plug of the male half. It is required that the optical fibers and optoelectric devices to be connected are opposed in an exact alignment. For the purpose of aligning the optical axes, the female half is formed with a conical surface adapted to receive the plug.

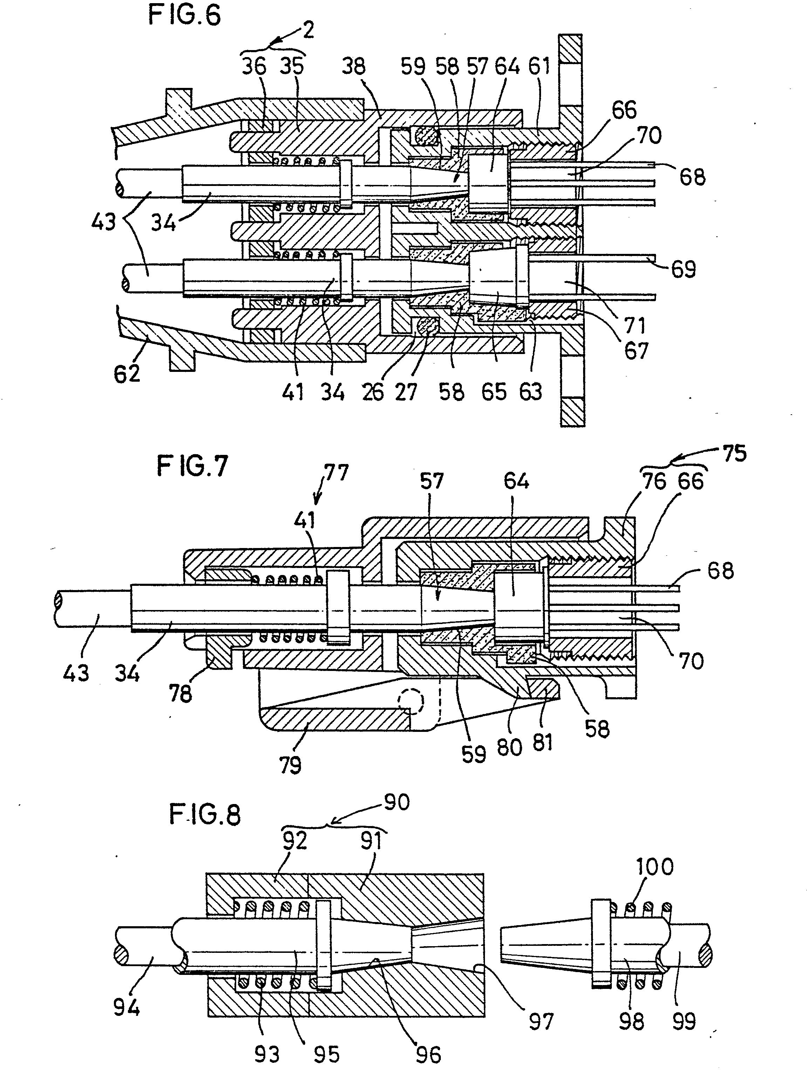

In the conventional optical connector as shown in Fig. 8, a female half 90 comprises a tubular housing 91 and a cover 92 for covering the rear end of the housing. A plug 95 attached to the end of optical fiber cord 94 is urged forwardly by a spring 93 in the female half 90. The housing

- 1 -

91 is formed with a rear conical surface 96 and a front conical surface 97. The front end of the plug 95 fits in the former.

On the other hand, a plug 98 in a male half (not shown) carries one end of an optical fiber cord 99. The plug is inserted into the front conical surface 99 in the housing 91 of the female half. If the central axes of the front and rear conical surfaces are positioned in an exact alignment, the plugs 95 and 98 will be opposed to each another in a proper manner, so that the coupling efficiency will be high.

The housing of an optical connector is generally made from plastics, and in a unsymmetric form in an axial direction. Plastic tends to undergo an unequal shrinkage, so that the front and rear conical surfaces 96, 97 will not be so symmetrical with each other. Thus, the axes of the front and rear conical surfaces 96, 97 will be out of alignment. As a result, the coupling efficiency would be low. The plug 98 in the male half, too, has to be kept in the front conical plane 96. It requires the use of a spring 100 to urge the plug 98. Namely, springs were needed for both the male and female halves.

The difficulties in aligning the central axes of the front and rear conical surfaces 96, 97 can be overcome by machining the conical inner surfaces after molded, but the machining of the parts molded from plastic is troublesome and inefficient.

An object of the present invention is to provide an optical connector which obviates such shortcomings.

The optical connector according to the present invention includes a separate member (sleeve) having conical surfaces disposed in the housing, instead of conical surfaces formed on the inner wall of the housing. Since the sleeve is a separate member from the housing, it can be easily manufactured in a symmetrical form. Another reason is that shrinkage after molding occurs equally at the front and rear portions of the sleeve.

Furthermore, the separate sleeve can be moved with respect to the housing. Therefore, the spring in the female half can be omitted. The movability of the separate sleeve gives a self-aligning effect between the plug and the plug or the plug and the optoelectric device, giving a good coupling efficiency.

Now, the arrangements, actions and effects of the present invention will be described in detail with reference to the accompanying drawings showing the embodiments of the optical connectors according to the present invention.

Fig. 1 is a horizontal sectional view of the first embodiment of the present invention,

Fig. 2 is a sectional view taken along line II-II of Fig. 1,

Fig. 3 is a sectional view of the sleeve,

Fig. 4 is a sectional view of another example of a sleeve,

Fig. 5 is a sectional view of a sleeve to be fit on the front portion of an optoelectric device,

Fig. 6 is a horizontal sectional view of the second embodiment of the present invention,

Fig. 7 is a vertical sectional view of the third embodiment, and

Fig. 8 is a sectional view of a conventional optical connector.

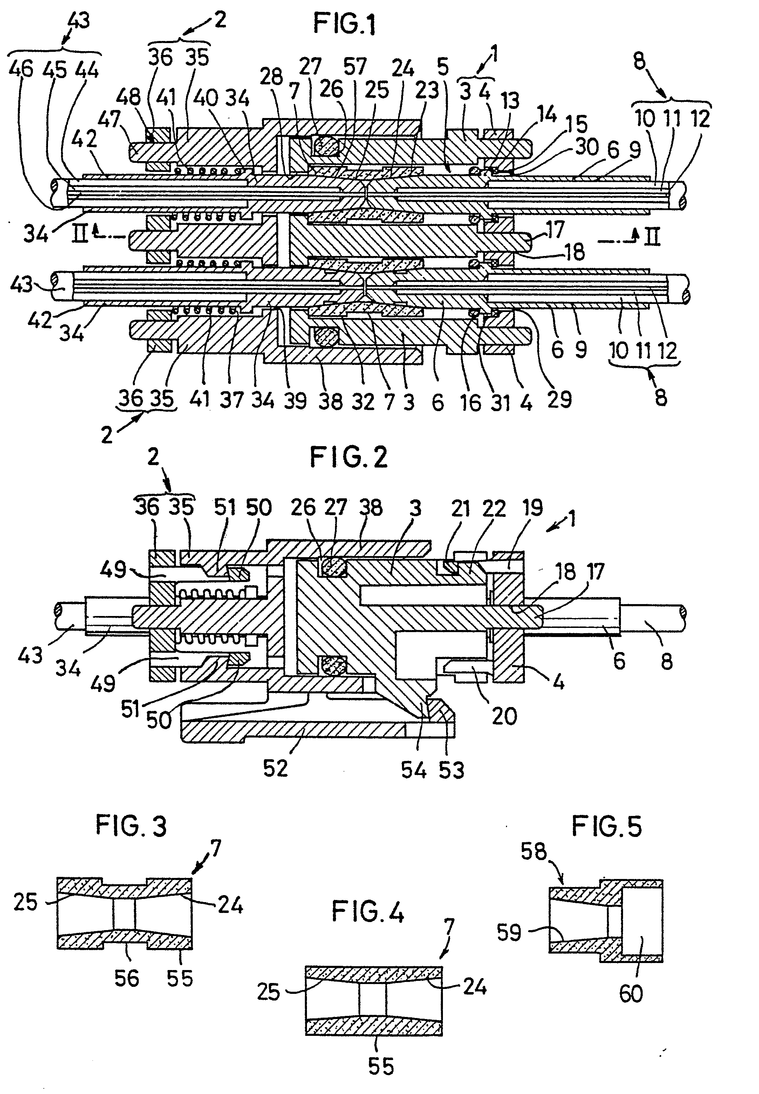

The embodiment of Fig. 1 is an optical connector for connecting two pairs of optical fibers together. The optical connector comprises a female half 1 and a male half 2. The female half 1 has a housing 3 and a cover 4 for covering the rear end of the housing. The housing is formed with two spaces 5 in each of which are accommodated a plug 6 and a sleeve 7.

The present invention is characterized in that the sleeves 7 engaging the front ends of the plugs 6 are separate from the housing 3.

An optical fiber cord 8 is inserted into each plug 6 through a long hole 9 at the rear part of the plug and the end of the cord is bonded to the interior of the plug. A jacket 10 and a strength member 11 are peeled in this order and a fiber 12 is introduced into an elongated hole at the front end of the plug 6.

The plug 6 is an elongated cylindrical member having a flange 13 at its middle. The conventional optical connector has a spring supported on the flange 13 to urge the plug forward, but no spring is required in the optical connector according to the present invention.

In this embodiment, a packing 14 is positioned behind the flange 13 and pushed by a shoulder 15 on the cover 4. The packing 14 may be omitted. In short, the plug 6 is retained in position firmly by means of the housing 3 and cover 4 without the use of any elastic member. An O-ring 16 is disposed as a buffer just in front of the flange 13 of the plug 6.

The connection between the housing 3 and cover 4 is provided as follows: A projection 17 provided at the rear end of the housing 3 passes through a hole 18 in the cover 4 and extension pieces 19, 20 extending from the cover 4 act to provide a firm coupling between the housing 3 and the cover 4. A jaw 21 at the front end of the extension piece 19 is adapted to engage a projection 22 on the housing 3. The plug 6 has a conical outer surface 23 tapering slightly.

The separate sleeve 7 has conical inner surfaces 24, 25 symmetrically positioned, as shown in Fig. 3, and the conical outer surface 23 of the plug is in a close contact with the conical inner surface 24 of the sleeve.

An O-ring 27 is received in a recess 26 formed on the outer periphery of the housing 3. It is interposed between the male and female halves 1, 2 to act as a buffer. In the front face of the housing 3 are formed windows 28 in communication with the conical inner surface 25 of the sleeve.

The plugs 6 and sleeves 7 can be slightly moved in a direction perpendicular to the axes of the housing 3 and cover 4; there is a gap 30 formed between a bore 29 in the cover 4 and the plug 6 and there is also a gap 31 formed between the flange 13 and the cover 4. In addition, there exists another gap 32 between the sleeve 7 and the housing 3.

A plug 34 in the male half 2 is elastically held by a housing 35 and a cover 36 and can be moved axially within a chamber 37 defined by the housing and the cover. From the front end of the housing 35, an outer wall 38 extends to enclose the front portion of the female half 1. The O-ring 27 abuts against the inner face of the outer wall 38, and the plug 34 passes through a bore 39, projecting beyond the end face of the housing.

A flange 40 is too large to pass through the bore 39 so that the plug is always pressed forwards by a spring 41. When coupled, the plug 34 is held in the position by the sleeve 7.

An optical fiber cord 43 is introduced into a long hole 42 in the plug 34. An outer jacket 44 and a strength member 45 are peeled and the fiber 46 is inserted into an elongated hole in the front portion of the plug.

Projections 47 at the rear end of the housing 35 are inserted into the cover 36 via bores 48 to place the housing and cover in appropriate positions. Salient pieces 49 projecting forwardly of the cover 36 have their jaws 50 engaging the corresponding projections 51 formed on the inner wall of the housing and projecting inwardly thereof. The female and male halves 1, 2 are coupled to each other by engaging a jaw 53 of a vertically deformable locking piece 52 secured to the male half 2 with a projection 54 formed on the female half 1.

As illustrated in Fig. 3, the sleeve 7 has the conical inner surfaces 24, 25 symmetrically positioned and has an annular recess 56 in the outer periphery 55 thereof.

Since the first embodiment is intended for connection between the identical plugs 6, 34, the conical inner surfaces 24, 25 of the sleeve 7 are of the same configuration. The sleeve 7, which is a separate member from the housing 3, can be made in a symmetrical shape, so that the shrinkage after molding occurs substantially to an equal degree over its entire length. The sleeve 7 may have no recess formed in its outer periphery.

The present invention is applied specifically to the female connector, but it is also applicable to the connection

0076514

between optical fibers and optoelectric devices, as well
as connection between the optical fibers.

A sleeve 58 as shown in Fig. 5 may be used for such
connections. The sleeve 58 has a front conical inner surface
59 for receiving a plug and a chamber 60 of a cylindrical
shape to the front conical inner surface, the chamber serving
to receive an optoelectric device.

Referring to Fig. 6, the male half 2 is identical to the
one in the first embodiment and adapted to hold the plugs 34,
with a boot 62 encasing the rear portion of the male half 2.

The female half 61 has a pair of chambers 63 for
receiving an element, in which are positioned optoelectric
devices 64, 65 with their heads received in the chamber 60
of the sleeve 58. The optoelectric devices 64, 65 and
sleeve 58 are held in position by screws 66, 67 without the
necessity of using any elastic member such as a spring. The
pins 68, 69 of the optoelectric devices 64, 65 extend
rearward through holes 70, 71.

In this embodiment, too, the sleeves 58 are separate
from the housing of the female half 61. By means of the
spring 41, the sleeves 58, optoelectric devices 64, 65 and
plugs 34 are properly coupled, so that the conical outer
surface 57 of the plug makes a close contact with the front
conical surface 59 in the sleeve 58. Since there still
remains a gap wide enough to allow a slight movement of the plugs 34, 34 and optoelectric devices 64, 65 in the direction perpendicular to the axis, self-alignment is effected between the plugs and the optoelectric devices so that they will be opposed with high coupling efficiency.

This embodiment has the male and female half connectors for use in connections between the two pairs of optical fiber cords and optoelectric devices. But, the present invention may be applicable to the optical connectors for use in connection between any number of pairs of optical fiber cords and optoelectric devices.

The embodiment of Fig. 7 is for connection of an optical fiber with an optoelectric device.

Referring to Fig. 7, a female half 75 incorporates a sleeve 58 which is separate from the housing 76. An optoelectric device 64 is pressed forwards by a screw 66. A male half 77 includes a plug 34 and a spring 41 for urging the plug forwardly. The plug is covered by a cover 78. The plug 34, sleeve 58 and optoelectric device 64 interact with each other by an elastic force of the spring 41 for proper alignment.

It will be understood from the foregoing that the present invention provides a female half with a separate sleeve in its housing, said sleeve serving to connect the plug or optoelectric device with the plug in a male half.

Because the sleeve is separate from the housing and simple in design, its conical surfaces can be made with
a high degree of accuracy and there is little problem due to
irregular shrinkage after molding.  Such a high degree of
accuracy will increase the coupling efficiency.

The female half does not require a spring.  Since the
sleeve is separate from the housing, the force of the spring
in the male half is transmitted through its plug and sleeve
to the plug and optoelectric device in the female half.
The female half is easy to manufacture since no spring is
used.

The sleeve is separate from the housing, but is slightly
movable in a direction perpendicular to the axis of the
connector.  This allows mutual displacements between the plug
and the sleeve or between the sleeve and the optoelectric
device so that they will be aligned with each other by
themselves.

What are claimed are:

1.    An optical connector comprising a male half and a female half having a cover and a tubular housing, and a sleeve mounted in said female half and adapted to receive a pair of plugs attached to the end of optical fibers or said plug and an optoelectric device.

2.    An optical connector comprising first and second coupling members (1,2),said first coupling member (1) comprising a housing (3) with at least one sleeve (7), said sleeve (7) having a first opening facing away from said second coupling member and a second opening facing towards said second coupling member (2) and being formed so as to receive a plug (34) projecting from said second coupling member (2) and connected to the end of an optical fiber(43),

characterised in that said sleeve (7) is mounted in said housing (3) as a seperate and exchangeable part for alternatively using sleeves (7, 58) with differently formed first openings.

3.    An optical connector as claimed in claim 1 , characterised in that alternative exchangeable sleeves (7, 58) have said first opening formed for receiving either a plug (6) formed at the end of an optical fiber (8), or an optoelectronic device (64) respectively.

0076514

FIG.1

FIG.2

FIG.3

FIG.4

FIG.5

**FIG.6**

**FIG.7**

**FIG.8**